# EUROPÄISCHE PATENTANMELDUNG

(11) **EP 0 672 335 A1**
(43) Veröffentlichungstag der Anmeldung: **20.09.1995**
(21) Anmeldenummer: 95102487.6
(22) Anmeldetag: 22.02.1995
(51) Int. Cl.: A01B 33/08

(54) **Bodenbearbeitungsmaschine**

(30) Priorität: 12.03.1994 DE 9404222 U
(71) Anmelder: Rabewerk GmbH + Co., 49152 Bad Essen (DE)
(72) Erfinder: Warnking, Richard, Dipl.-Ing., D-49152 Bad Essen (DE)
(74) Vertreter: Missling, Arne, Dipl.-Ing.

(57) **Zusammenfassung**

Die Erfindung betrifft eine Bodenbearbeitungsmaschine (10), insbesondere Kreiselegge, mit mehreren Werkzeugen (22), die an jeweils mit in einem Lagergehäuse (16) gelagerten Wellen (24) drehfest verbundenen Werkzeugträgern (20) befestigt sind, welche von mit den Wellen (24) im kraftschlüssigen Eingriff befindlichen Zahnrädern (26) beaufschlagt sind, wobei jede Welle (24) in eine am zugeordneten Zahnrad (26) in dessen Nabe (27) hierfür vorgesehene koaxiale Ausnehmung (28, 29, 38) eingreift und mittels einer durch eine zentrische Gewindeverbindung gebildete Spannvorrichtung mit dem Zahnrad (26) zentriert und gekoppelt ist, wobei jede Welle (24) mit einem an ihrem dem Zahnrad (26) zugeordneten Ende angeordneten Gewindezapfen (30, 34) in einer in der Nabe (27) des Zahnrades (26) oder in an der Nabe (27) kraft- und/oder formschlüssig angeordneten Backen (41, 42) vorgesehenen Gewindebohrung (29, 39) befestigt ist und wobei an die Welle (24) eine eine axiale Bewegung des Zahnrades (26) begrenzende Anschlagfläche (25, 36, 51) angeformt ist, an welcher sich die Nabe (27) des Zahnrades (26) oder der Backen (41, 42) abstützt.

## Beschreibung

Die Erfindung betrifft eine Bodenbearbeitungsmaschine, insbesondere Kreiselegge, mit mehreren Werkzeugen, die an jeweils mit in einem Lagergehäuse gelagerten Wellen drehfest verbundenen Werkzeugträgern befestigt sind, welche von mit den Wellen im kraftschlüssigen Eingriff befindlichen Zahnrädern beaufschlagt sind, wobei jede Welle in eine am zugeordneten Zahnrad in dessen Habe hierfür vorgesehene koaxiale Ausnehmung eingreift und mittels einer durch eine zentrische Gewindeverbindung gebildete Spannvorrichtung mit dem Zahnrad zentriert und gekoppelt ist.

Bodenbearbeitungsmaschinen mit rotierenden Werkzeugen, insbesondere Kreiseleggen, sind in unterschiedlichsten Ausgestaltungen bekannt. Dabei ist als Hauptproblem die Lagerung der Werkzeuge bei gleichzeitig ausreichender Steifigkeit des die Werkzeuge und deren Antriebsvorrichtungen aufnehmenden Gehäuses sowie deren Schmierung anzusehen. Darüberhinaus ist darauf zu achten, daß im Falle von Beschädigungen eines Werkzeugs, dieses möglichst rasch und leicht ausgewechselt werden kann.

Um diesen Erfordernissen Rechnung zu tragen, ist aus der EP-A 0 567 750 eine Bodenbearbeitungsmaschine der eingangs genannten Art bekannt, welche ein aus einem Hohlprofil gebildetes Gehäuse aufweist, welches einerseits ausreichend steif ist und andererseits durch entsprechende stirnseitige Verschlußbleche im Inneren befindliches Schmiermittel aufnimmt für die Schmierung der zum Antrieb der an Werkzeugträgern befestigten Werkzeuge vorgesehenen Zahnräder, welche zumeist mit Stirnverzahnung versehen sind.

Zur Montage der einzelnen Werkzeuggruppen und der zugeordneten Antriebszahnräder sind in den Stirnseiten des Kastenhohlprofils entsprechende Öffnungen vorgesehen, durch welche die Zahnräder in das Innere des Gehäuses eingeführt sind und welche mittels hierfür vorgesehener Deckel verschlossen sind. Die Wellen mit den Lagern werden von unten her montiert, wobei die Zahnräder mit den Wellen verbunden werden.

Der Verbindung der Wellen mit den zugeordneten Zahnrädern, die auf sehr unterschiedliche Art, beispielsweise kraft- und/oder formschlüssig, vorgesehen sein kann, kommt insofern große Bedeutung zu, als die Art der Verbindung sowohl Auswirkung auf den hierfür erforderlichen Fertigungs- und ggf. Reparaturaufwand im Schadensfall als auch auf die Anfälligkeit für Beschädigungen im Betrieb hat.

Hierbei ist insbesondere die Drehfestigkeit der Welle-Zahnrad-Verbindung von Bedeutung, damit sich bei der Drehung der Zahnräder an benachbarten Werkzeugträgern die jeweilige Position der daran befestigten Werkzeuge synchron miteinander ändert, so daß diese nicht miteinander in Kollision geraten und hierdurch Störungen bzw. Beschädigungen verursachen.

Die aus der EP-A-0 567 750 bekannte Verbindung erfordert einen nicht unbeträchtlichen Aufwand bei der Herstellung, da zur Verbindung mit dem Zahnrad die Welle jeweils durch formschlüssigen Eingriff mittels angeformter Stirnverzahnung oder mittels Keilwellenprofil, ggf. kombiniert mit einem Konus erfolgt.

Ausgehend von diesem Stand der Technik ist es Aufgabe der Erfindung, eine Bodenbearbeitungsmaschine der eingangs genannten Art zu schaffen, deren Herstellung und Montierbarkeit ohne Verlust an Funktionstüchtigkeit, das heißt ohne Beeinträchtigung des geforderten Rundlaufs der rotierenden Teile, vereinfacht ist und die Wellen- und Lagerdurchmesser gering gehalten werden können.

Diese Aufgabe wird erfindungsgemäß durch die Merkmale des Anspruchs 1 gelöst. Demgemäß ist vorgesehen, daR jede Welle mit einem an ihrem dem Zahnrad zugeordneten Ende angeordneten Gewindezapfen in einer in der Nabe des Zahnrades oder in an der Nabe kraft- und/oder formschlüssig angeordneten Backen vorgesehenen Gewindebohrung befestigt ist und daß an die Welle eine eine axiale Bewegung des Zahnrades begrenzende Anschlagfläche angeformt ist, an welcher sich die Nabe des Zahnrades oder der Backen abstützt.

Mit der erfindungsgemäßen Konstruktion ist die aufwendige Bearbeitung von formschlüssigen Paßflächen entbehrlich. Die Herstellung des Gewindes und der Anlagefläche an der Welle und am Zahnrad erfordern weder hohe Präzision noch aufwendige Werkzeuge, so daß sich der Aufwand sowohl bei der mechanischen Bearbeitung als auch bei der Montage, sei es bei der Erstmontage oder bei einer Reparatur, stark verringert. Die hierbei erreichte Zentrierung gewährleistet den geforderten Rundlauf und ein Taumeln des Zahnrades ist infolge der Anlage der Anschlagfläche von Welle und Zahnrad sicher verhindert.

In zweckmäßiger Weiterbildung der Erfindung kann es ohne nachteilige Auswirkung auf die Fertigung vorteilhaft sein, daß jede Welle an ihrem dem Zahnrad zugeordneten Ende zusätzlich einen Zentrierbund aufweist, welcher kompatibel ist mit einer Zentrierbohrung in der Nabe des Zahnrades. Dabei kann der Zentrierbund sowohl den Wellenabschluß bilden, oder - bevorzugterweise - der Gewindezapfen schließt stirnseitig an den Zentrierbund an. Der Durchmesser des Zentrierbundes kann etwa gleich dem Gewindedurchmesser sein.

Eine bevorzugte Ausgestaltung der Erfindung sieht vor, daß der Gewindezapfen als Schraubenbolzen ausgebildet ist, der von der Welle lösbar ist und der die Welle in einer zentrischen Durchgangsbohrung durchgreift.

Der lösbare Schraubenbolzen kann eine Paßschraube mit genau toleriertem Schaftdurchmesser sein, die die Zentrierung für das Zahnrad und die Welle bildet.

Eine weitere günstige Ausgestaltung der Erfindung sieht vor, daß ein Innengewinde in die Nabe des Zahnrades eingeschnitten ist und so die Gewindebohrung bildet. Stattdessen kann aber auch eine an der Nabe des Zahnrades außen angesetzte Gewindemutter bzw. ein in die Nabe des Zahnrades eingesetzter Gewindeeinsatz als Gewindebohrung vorgesehen sein. Dieser Gewindeeinsatz kann vorteilhafterweise ebenfalls eine Gewindemutter sein.

Im Hinblick auf leichte und kostengünstige Montage bzw. Auswechselbarkeit von Werkzeugen kann vorgesehen sein, daß jeder Werkzeugträger mit der zugeordneten Welle verschraubt ist. Für die geforderte Steifigkeit ist es jedoch vorteilhaft, wenn jeder Werkzeugträger mit der Zugeordneten Welle unlösbar verbunden ist. Dies ist beispielsweise gemäß einer Ausgestaltung der Erfindung dadurch erreicht, daß jeder Werkzeugträger einstückig mit der zugeordneten Welle gefertigt ist. Stattdessen kann aber vorgesehen sein, daß jeder Werkzeugträger mit der zugeordneten Welle verschweißt ist.

Insbesondere, wenn die Welle und der Werkzeugträger miteinander verschweißt werden sollen, ist es von Vorteil, daß jeder Werkzeugträger materialeinheitlich mit der zugeordneten Welle ist.

Da die Werkzeuge benachbarter Werkzeugträger bei Bodenbearbeitungsmaschinen der erfindungsgemäßen Art sich gegeneinander drehen, ist in weiterer Verbesserung der Erfindung vorgesehen, daß das Innengewinde der Gewindebohrung und des hierzu kompatiblen Außengewindes des Gewindezapfens bei einem von oben gesehenen rechtsdrehenden Kreisel als Rechtsgewinde und bei dem linksdrehenden Kreisel als Linksgewinde ausgeführt ist. Hierdurch ist sichergestellt, daß es durch die Drehung nicht zu einer Lockerung der Schraubverbindung zwischen der Welle und dem zugeordneten Zahnrad kommt.

Dabei kann in Weiterbildung der Erfindung das Innengewinde der Gewindebohrung und des hierzu kompatiblen Außengewindes des Gewindezapfens als Rundgewinde oder als Trapezgewinde ausgeführt sein. Diese können sowohl als eingängiges als auch als mehrgängiges Gewinde ausgebildet sein.

Um eine ungewünschte Lockerung der Schraubverbindung von Welle und Zahnrad im Betrieb sicher zu verhindern, kann vorteilhafterweise vorgesehen sein, daß der als Gewindezapfen dienende Schraubenbolzen mit einer mechanischen Schraubensicherung gegen Losdrehen gesichert ist. Diese Schraubensicherung kann durch Verwendung von Sicherungsblechen oder Sicherungsscheiben erreicht werden, welche formschlüssig mit dem Sechskantkopf des Schraubenbolzens und der zugewandten Stirnseite der Welle im Eingriff sind, oder dadurch, daß der Schraubenbolzen mit einem Schraubenkopf mit großer Auflagefläche vorgesehen ist, die ggf. zusätzlich mit einer profilierten, z.B. radial geriffelten, Oberfläche versehen ist. Einige dieser Losdrehsicherungen sind im Stand der Technik bereits bekannt und im Handel erhältlich, so daß sie keiner weiteren Erläuterung bedürfen. Ebenso besteht natürlich auch die Möglichkeit der Verwendung von Sicherungslack oder geeignetem Klebstoff, um ein Lösen der Schraubverbindung zu unterbinden.

Eine besonders einfache Ausbildung erhält man, wenn man die Gewindebohrung im Zahnrad als Sackloch ausbildet. Vorteilhaft ist es ebenfalls, eine Verbindung von Zahnrad und Welle dadurch herzustellen, in dem auf den Seiten des Flansches Backen angebracht werden, die mit dem Flansch des Zahnrades verspannt werden und an der Welle anliegen. Vorteilhaft werden die Klemmbacken formschlüssig untereinander sowie mit Welle und Flansch verbunden. Hierdurch kann die Nabe des Zahnrades dünner ausgebildet werden.

Diese und weitere vorteilhafte in der Beschreibung erläuterte Ausgestaltungen der Erfindung sind Gegenstand der abhängigen Ansprüche.

Anhand von mehreren in der Zeichnung dargestellten Ausführungsformen für die mögliche erfindungsgemäße Verbindung jeder Welle mit dem zugeordneten Zahnrad sollen die Erfindung, vorteilhafte Ausgestaltungen der Erfindung sowie besondere Vorteile und Verbesserungen der Erfindung näher erläutert werden. Es zeigen:
- Fig. 1: einen Querschnitt durch eine erfindungsgemäße Bodenbearbeitungsmaschine mit einer ersten Ausführungsform der Welle-Zahnrad-Verbindung ,
- Fig. 2: die Anordnung gemäß Fig. 1 im ausschnittweisen Längsschnitt
- Fig. 3: die ausschnittweise Schnittansicht einer zweiten Ausführungsform der Welle-Zahnrad-Verbindung,
- Fig. 4: die ausschnittweise Schnittansicht einer dritten Ausführungsform der Welle-Zahnrad-Verbindung,
- Fig. 5: die ausschnittweise Schnittansicht einer vierten Ausführungsform der Welle-Zahnrad-Verbindung,
- Fig. 6: die ausschnittweise Schnittansicht einer fünften Ausführungsform der Welle-Zahnrad-Verbindung,
- Fig. 7: eine weitere Ausführungsform einer Verbindung von Welle und Zahnrad,
- Fig. 8: eine Ausführungsform gemäß der Erfindung, bei der das Zahnrad beidseitig zwischen Backen eingespannt ist,
- Fig. 9: eine Variante gemäß Fig. 8,
- Fig. 10: eine Ausführungsform gemäß Fig. 1 mit einer Montagehilfe und
- Fig. 11: und
- Fig. 12: zwei weitere Ausführungsformen gemaß der Erfindung.

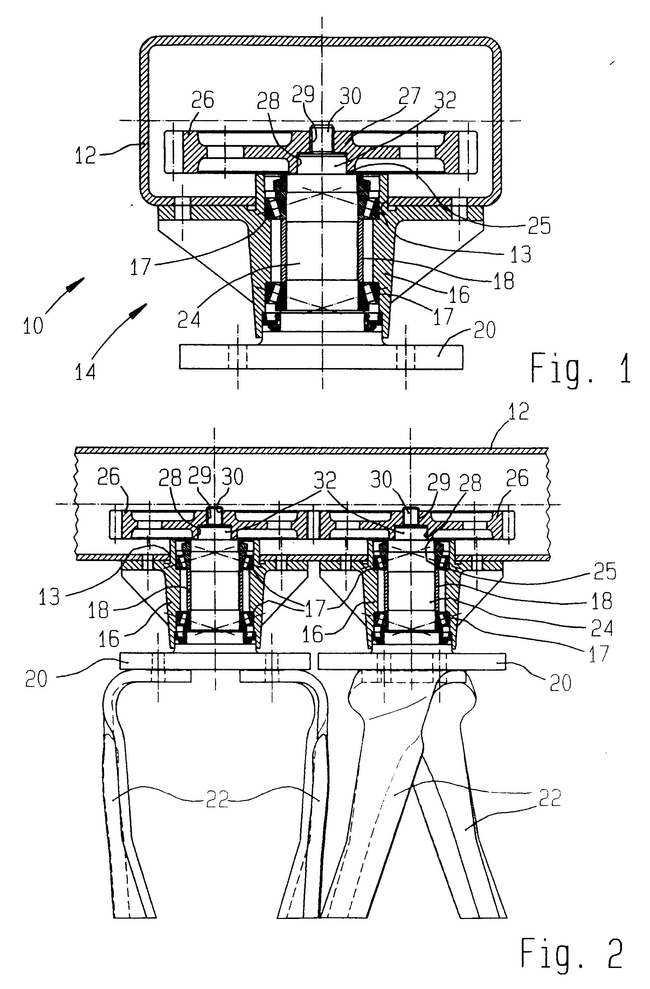

In Fig. 1 ist ein Querschnitt durch eine erfindungsgemäße Bodenbearbeitungsmaschine 10 gezeigt, die ein Gehäuse 12 aufweist, welches zur Erzielung größtmöglicher Steifigkeit aus einem geschlossenen Kastenprofil gebildet ist. An der Unterseite des Gehäuses 12 sind, wie anhand des in Fig. 2 gezeigten Längsschnittes der Bodenbearbeitungsmaschine 10 gemäß Fig.1 ersichtlich ist, im Abstand zueinander jeweils zu einer Werkzeuggruppe 14 gehörige, mit Versteifungsrippen versehene Lagergehäuse 16 angeflanscht, welche in hierfür an der Unterseite des Gehäuses 12 angeordnete Ausnehmungen 13 eingreifen.

Jeder Werkzeugsatz 14 besteht aus einem Werkzeugträger 20, an welchem Werkzeuge 22 zur Bodenbearbeitung befestigt sind, und aus einer Welle 24, die mittels im Lagergehäuse 16 eingesetzter Wälzlager 17 gelagert ist. Auf jede Welle 24 ist eine Abstandshülse 18 aufgeschoben, wodurch die Wälzlager 17 jeweils auf Abstand festgelegt werden. Der Werkzeugträger 20 ist mit der Welle 24 fest verbunden, vorzugsweise verschweißt oder einstückig hergestellt. Das freie Ende der Welle 24 ist drehfest, aber lösbar mit einem zugeordneten Zahnrad 26 verbunden.

Gemäß der Erfindung durchgreift die Welle 24 die Radnabe 27 des Zahnrades 26 mit einem angeformten Gewindezapfen 30 und legt sich mit einer Anschlagringfläche 25 an die Radnabe 27 an. Wie in Fig. 1 und 2 gezeigt, ist die Radnabe 27 des Zahnrades 26 mit einer zweistufigen zentrischen Bohrung 28, 29 versehen, nämlich mit einer ersten zylindrischen Stufe 28 mit größerem Durchmesser und mit einer zweiten Stufe 29 mit kleinerem Durchmesser. Dabei greift die Welle 24 mit einem zylindrischen Zentrierbund 32 mit größeren Durchmesser in die hierzu korrespondierende zylindrische Zentrierbohrung 28 im in der Radnabe 27, während der dünnere zylindrische Gewindezapfen 30 in die hierzu kompatible Durchgangsbohrung 29 eingreift, welche bei diesem Ausführungsbeispiel mit einem Innengewinde versehen ist. Die Anschlagringfläche 25 weist einen größeren Durchmesser als der Zentrierbund 32 auf und bietet daher neben der axialen Festlegung des Zahnrades 26 auf der Welle 24 größtmögliche Sicherheit gegen ein Taumeln des Zahnrades 26, während der Zentriersitz des zylindrischen Zentrierbundes 32 in der zylindrischen Zentrierbohrung 28 für einen guten Rundlauf maßgeblich ist.

Um im Bedarfsfalle, zum Beispiel bei einer Reparatur, die richtige Stellung des Werkzeugträgers 20 einstellen zu können, besteht die Möglichkeit zwischen die Anschlagringfläche 25 von Welle 24 und Zahnrad 26 Ausgleichs- oder Zwischenscheiben einzufügen. Der Werkzeugträger 20 kann aber auch in einer zum Gewinde genau festgelegten Stellung hergestellt sein.

Außerdem besteht die Möglichkeit, an Stelle einer festen, das heißt unlösbaren, Verbindung zwischen dem Werkzeugträger 20 und der Welle 24 auch eine lösbare Verbindung vorzusehen.

In Fig. 3 ist eine Querschnittansicht einer ähnlichen Bodenbearbeitungsmaschine 10, wie in Fig. 1 dargestellt, gezeigt, wobei an Stelle eines an die Welle 24 angeformten Gewindezapfens ein die Welle axial durchgreifender Schraubenbolzen 34 vorgesehen ist. Mit Ausnahme dieser anderen Art der Welle-Zahnrad-Verbindung stimmen die übrigen Merkmale mit denen der konstruktiven Ausgestaltung der Erfindung gemäß Fig. 1 und 2 überein. Bei dieser Ausführungsform kann der Werkzeugträger 20 gegenüber dem Zahnrad 26 frei eingestellt werden, d. h. Distanzscheiben und dgl. werden nicht benötigt.

Als Besonderheit weist der Schraubenbolzen 34 einen Sechskant-Schraubenkopf mit einer vergrößerten Auflagefläche auf, welche ein ungewolltes Lockern der Schraubverbindung infolge Erschütterungen oder Schwingungen verhindert. Vorzugsweise kann hierbei die Auflagefläche zusätzlich profiliert sein, zum Beispiel mit einem radialen Zahnprofil, welches sich in die jeweilige Schraubengegenfläche einprägt und so einer rein reibschlüssigen Hemmkraft einen formschlüssigen Widerstand gegen Lockerung der Verbindung überlagert.

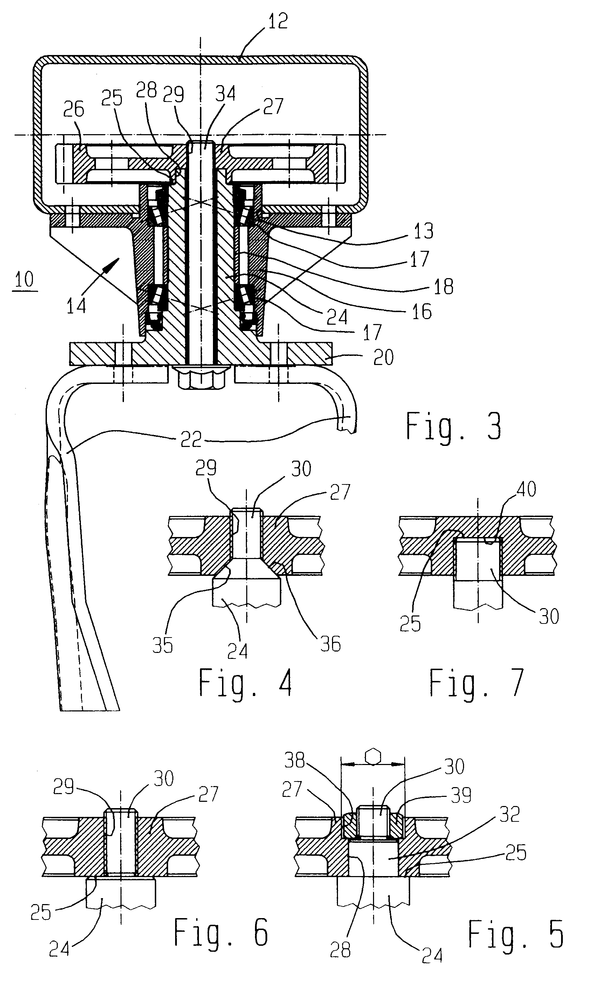

In Fig. 4 ist eine Variante zu der Ausgestaltung der Zentrieranordnung gemäß Fig. 1 und 2 dargestellt, bei welcher an Stelle der Anschlagringfläche 25 und des zylindrischen Zentriersitzes von Zentrierbund 32 und Bohrung 28 ein Konus 35, 36 vorgesehen ist, welcher beide Aufgaben in sich vereinigt. Durch Festlegen der Gewindeverbindung wird das Zahnrad 26 mit seinem zentral angeordneten Innenkonus 35 auf den Außenkonus 36 der Welle 24 gezogen, wodurch gleichzeitig eine gute Zentrierung wie auch ein erhöhter Widerstand gegen Lockern aufgrund der vergrößerten Anlagefläche erreicht wird.

Eine weitere Ausgestaltung der Welle-Zahnrad-Verbindung gemäß der Erfindung ist in Fig. 5 gezeigt. Hier ist die von dem an die Welle angeformten Gewindezapfen 30 durchgriffene Durchgangsbohrung nicht mit einem Innengewinde versehen wie gemäß Fig. 1 oder 2, sondern stattdessen ist eine im Durchmesser erweiterte Ausnehmung 38 vorgesehen, in welche ein Gewindeeinsatz 39 eingesetzt ist, der hier in Form einer Sechskant-Mutter ausgebildet ist. Die Ausnehmung 38 kann formgeschmiedet oder formgepreßt sein, das heißt, an die Kontur der Gewindemutter 39 angepaßt sein, so daß diese verdrehsicher darin aufgenommen ist. Der Vorteil dieser Ausgestaltung beruht darauf, daß bei einer Beschädigung des Gewindes nicht mehr das ganze Zahnrad 26 ausgewechselt werden muß, sondern es genügt, die Mutter 39 zu wechseln.

Schließlich ist in Fig. 6 eine gegenüber den bisher gezeigten Ausführungsformen vereinfachte Welle-Zahnrad-Verbindung gezeigt, bei welcher nur eine ungestufte Durchgangsbohrung 29 mit Innengewinde vorgesehen ist, welche die Zentrierung der Radnabe 27 des Zahnrades 26 an der Welle 24 lediglich durch Festlegen der Anschlagringflächen 25 von Welle 24 und Radnabe 27 aneinander übernimmt. Bei dieser Variante wird also die Radnabe 27 des Zahnrades 26 direkt auf das mit Außengewinde versehene Wellenende gegen die Anschlagringfläche 25 aufgeschraubt. Diese Variante stellt die Grundform der vorliegenden Erfindung dar, die eine besonders einfach herstellbare aber ausreichend zuverlässige Welle-Zahnrad-Verbindung bietet.

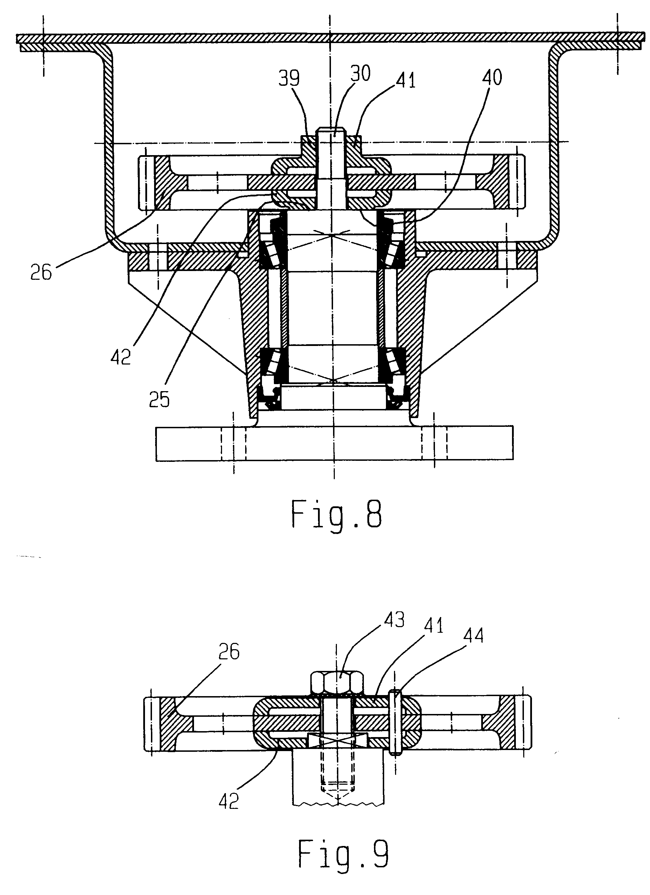

Bei dem Ausführungsbeispiel nach Fig. 7 ist in der Nabe 27 des Zahnrades 26 eine Gewindebohrung 29 ausgebildet, die als Sackloch ausgebildet ist. Der in diese Gewindebohrung eingeschraubte Gewindezapfen 30 bildet eine Anschlagfläche 25, die am Boden 40 des Sackloches zur Anlage kommt. Hierdurch wird der Aufwand für die Herstellung der Anschlagflächen weiter minimiert.

Bei dem Ausführungsbeispiel nach Fig. 8 ist ein zweiteiliges Gehäuse verwendet worden, wobei die Art der Befestigung weiter von dem Ausführungsbeispielen nach den Fig. 1 bis 7 differiert. Bei diesem Ausführungsbeispiel ist eine Zahnrad 26 mit einem sehr dünnen Nabenbereich und einer entsprechend dünnen ausgebildeten Habe 27 eingesetzt worden. Die Welle ist mit einem Gewindezapfen 30 versehen, der durch eine Bohrung in der Nabe 27 des Zahnrades 26 greift. Zu beiden Seiten des Nabenbereiches des Zahnrades 26 sind zwei Backen 41, 42 angeordnet, wobei in der außen liegenden Backe 41 eine Gewindebohrung 39 angebracht ist. Beim Festdrehen des Gewindezapfens 30 in der Gewindebohrung 39 des Backens 41 werden die beiden Backen 41, 42 gegeneinander verspannt und gleichzeitig gegen die Anschlagfläche 25 der Welle 24 gepreßt, so daß bereits hierdurch eine definierte und drehfeste Sicherung erreicht wird. Vorteilhaft sind die Backen 41, 42, die Nabe 27 und die Welle 24 zusätzlich formschlüssig miteinander verbunden, und zwar mit Hilfe eines Stiftes 44, der alle Teile durchgreift.

Das in Fig. 9 gezeigte Ausführungsbeispiel entspricht im wesentlichen dem der Fig. 8 mit dem Unterschied, daß der Gewindezapfen 30 durch einen Gewindebolzen 43 ersetzt worden ist, der die beiden Backen 41, 42 und die Nabe 27 des Zahnrades 26 durchgreift und in eine Gewindebohrung der Welle 24 eingreift. Diese kraftschlüssige Verbindung wird gleichermaßen durch eine formschlüssige Verbindung ergänzt, die durch den Stift 44 gebildet wird.

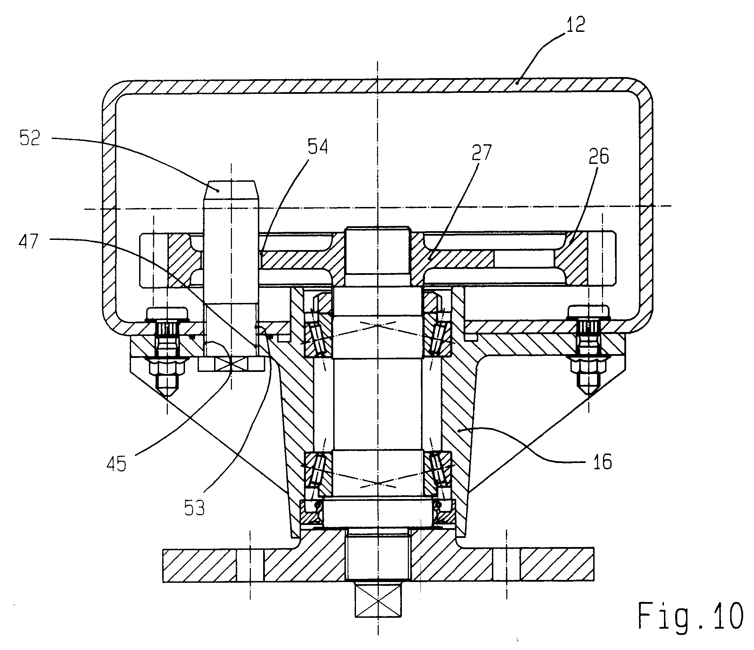

Das Ausführungsbeispiel nach Fig. 10 entspricht dem Ausführungsbeispiel nach Fig. 1, wobei hier zusätzlich eine Bohrung 53 im Gehäuse 12 und im Lagergehäuse 16 vorgesehen sind, wobei die Bohrung im Gehäuse zusätzlich mit Gewinde versehen ist. Des weiteren ist in der Nabe 27 des Zahnrades 26 eine Bohrung 54 angeordnet, die in eine Stellung bringbar ist, in der sie mit der Bohrung in der Nabe 27 und der im Gehäuse 12 fluchtet. In diese Bohrungen wird dann ein Gewindebolzen 52 eingesetzt, der allein der Festlegung des Zahnrades 26 bei der Montage dient. Dieser Gewindebolzen wird dann nach erfolgter Montage wieder entfernt und die Gewindebohrung 53 durch einen Stopfen verschlossen.

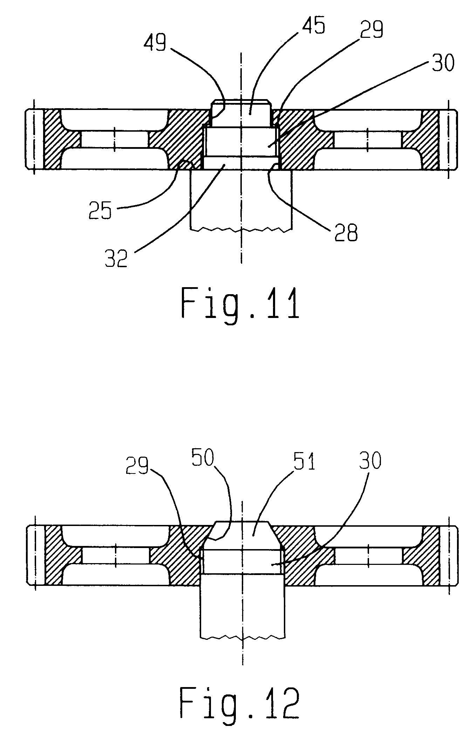

Bei dem Ausführungsbeispiel nach Fig. 11 ist die im Zahnrad 26 angeordnete Gewindebohrung 29 zwischen zwei als Zentrierbohrungen ausgebildete Ausnehmungen 28 und 49 angeordnet. Hierdurch wird der Vorteil erhalten, daß die Gewindebohrung 29 geschützt liegt und somit ein Ausbrechen von Gewindeflanken sicher vermieden ist.

Bei dem Ausführungsbeispiel nach Fig. 12 grenzt an der Gewindebohrung 29 ein sich zur Außenseite hin in seinem Durchmesser verringernder Konus 50, der mit einem kegelstumpfförmigen Ende 51 des Gewindezapfens 31 zusammenwirkt. Dieses kegelstumpfförmige Ende 51 bildet dann die Anschlagfläche 25.

Bei allen beschriebenen Ausführungsformen der Welle-Zahnrad-Verbindung ist von wesentlicher Bedeutung, daß die zur Befestigung der Welle am Zahnrad vorgesehenen Gewinde der jeweiligen bestimmungsgemäßen Drehrichtung der Welle entsprechen, um so ein Lockern der Schraubverbindung zu verhindern, das heißt, da aufgrund miteinander im Eingriff befindlicher benachbarter Zahnräder die Drehrichtung sich entsprechend ändert, sind auch die Wellen 24 benachbarter Werkzeuggruppen 14 abwechselnd mit Rechts- und mit Linksgewinde versehen.

### Aufstellung der Bezugszeichen

- 10: Bodenbearbeitungsmaschine
- 12: Gehäuse
- 13: Ausnehmung
- 14: Werkzeuggruppe
- 16: Lagergehäuse
- 17: Wälzlager
- 18: Hülse
- 20: Werkzeugträger
- 22: Werkzeug
- 24: Welle
- 25: Anschlagfläche
- 26: Zahnrad
- 27: Nabe
- 28: Zentrierbohrung (Ausnehmung)
- 29: Gewindebohrung (Ausnehmung)
- 30: Gewindezapfen
- 32: Zentrierbund
- 34: Schraubenbolzen
- 35: Anschlagfläche
- 36: Zentrierbund
- 38: Ausnehmung
- 39: Gewindebohrung
- 40: Anlagefläche
- 41: Backen
- 42: Backen
- 43: Gewindebolzen
- 44: Stift
- 49: Zentrierbohrung
- 50: Konus
- 51: kegelstumpfförmiges Ende
- 52: Bolzen
- 53: Bohrung
- 54: Bohrung

## Patentansprüche

1. Bodenbearbeitungsmaschine (10), insbesondere Kreiselegge, mit mehreren Werkzeugen (22), die an jeweils mit in einem Lagergehäuse (16) gelagerten Wellen (24) drehfest verbundenen Werkzeugträgern (20) befestigt sind, welche von mit den Wellen (24) im kraftschlüssigen Eingriff befindlichen Zahnrädern (26) beaufschlagt sind, wobei jede Welle (24) in eine am zugeordneten Zahnrad (26) in dessen Habe (27) hierfür vorgesehene koaxiale Ausnehmung (28, 29, 38) eingreift und mittels einer durch eine zentrische Gewindeverbindung gebildete Spannvorrichtung mit dem Zahnrad (26) zentriert und gekoppelt ist, dadurch gekennzeichnet, daß jede Welle (24) mit einem an ihrem dem Zahnrad (26) zugeordneten Ende angeordneten Gewindezapfen (30, 34) in einer in der Nabe (27) des Zahnrades (26) oder in an der Nabe (27) kraft- und/oder formschlüssig angeordneten Backen (41, 42) vorgesehenen Gewindebohrung (29, 39) befestigt ist und daß an die Welle (24) eine eine axiale Bewegung des Zahnrades (26) begrenzende Anschlagfläche (25, 36, 51) angeformt ist, an welcher sich die Nabe (27) des Zahnrades (26) oder der Backen (41, 42) abstützt.

2. Bodenbearbeitungsmaschine nach Anspruch 1, dadurch gekennzeichnet, daß jede Welle (24) an ihrem dem Zahnrad (26) zugeordneten Ende zusätzlich einen Zentrierbund (32, 36) aufweist, welcher Zentrierbund (32, 36) kompatibel ist mit einer Zentrierbohrung (28) in der Nabe (27) des Zahnrades (26), wobei vorteilhaft der Zentrierbund (32, 36) zylindrisch oder konisch ausgebildet ist und insbesondere der Durchmesser des Zentrierbundes (32) etwa gleich dem Durchmesser des Gewindezapfens (30) ist.

3. Bodenbearbeitungsmaschine nach einem der vorherigen Ansprüche, dadurch gekennzeichnet, daß der Gewindezapfen (30) stirnseitig an den Zentrierbund (32, 36) anschließt, wobei vorteilhaft ein als Gewindezapfen dienende Schraubenbolzen (34) mit einer Schraubensicherung gegen Losdrehen gesichert ist.

4. Bodenbearbeitungsmaschine nach einem der vorherigen Ansprüche, dadurch gekennzeichnet, daß als Gewindezapfen ein von der Welle (24) lösbarer Schraubenbolzen (34) vorgesehen ist, der entweder die Welle (24) in einer zentrischen Durchgangsbohrung (29) durchgreift oder in eine in der Welle vorgesehenen Gewindebohrung eingreift und so das Zahnrad (26) mit der Welle (24) verspannt, wobei vorteilhaft der Schraubenbolzen zur Sicherung gegen Losdrehen mit einem Schraubenkopf mit profilierter, z.B. radial geriffelter, Auflagefläche versehen ist.

5. Bodenbearbeitungsmaschine nach einem der vorhergehenden Ansprüche, dadurch gekennzeichnet, daß der lösbare Schraubenbolzen (34) eine Paßschraube ist, dessen Schaft die Zentrierung für das Zahnrad (26) und die Welle (24) bildet.

6. Bodenbearbeitungsmaschine nach einem der vorherigen Ansprüche, dadurch gekennzeichnet, daß die Gewindebohrung als in die Durchgangsbohrung (29) in der Nabe (27) des Zahnrades (26) eingeschnittenes Innengewinde ausgebildet ist, wobei vorteilhaft als Gewindebohrung entweder eine an die Nabe (27) des Zahnrades (26) angesetzte Gewindemutter oder ein in die Nabe (27) des Zahnrades (26) eingesetzter Gewindeeinsatz vorgesehen ist, der insbesondere eine Gewindemutter (39) ist.

7. Bodenbearbeitungsmaschine nach einem der vorhergehenden Ansprüche, dadurch gekennzeichnet, daß die Verbindung der Welle (24) mit dem Zahnrad (26) zusätzlich formschlüssig ausgebildet ist, z. B. mittels einer Paßfeder.

8. Bodenbearbeitungsmaschine nach einem der vorherigen Ansprüche, dadurch gekennzeichnet, daß das Innengewinde der Gewindebohrung (29, 39) und des hierzu kompatiblen Außengewindes des Gewindezapfens (30, 34) als Rundgewinde, als Trapezgewinde oder als mehrgängiges Gewinde ausgeführt ist, und wobei der als Gewindezapfen dienende Schraubenbolzen (34) vorteilhaft mit einer Schraubensicherung gegen Losdrehen gesichert ist.

9. Bodenbearbeitungsmaschine nach einem der vorherigen Ansprüche, dadurch gekennzeichnet, daß die Gewindebohrung (39) im Zahnrad (26) als Sackloch ausgebildet ist, dessen Boden (40) die Anschlagfläche (25) bildet.

10. Bodenbearbeitungsmaschine nach einem der vorherigen Ansprüche, dadurch gekennzeichnet, daß beidseitig des Nabenbereiches des Zahnrades (26) je eine Klemmbacke (41, 42) angeordnet ist, wobei eine der Klemmbacken (41) eine Gewindebohrung (39) für die Aufnahme des Gewindezapfens (30, 34) aufweist.

11. Bodenbearbeitungsmaschine nach Anspruch 10, dadurch gekennzeichnet, daß die der Welle (24) benachbarte Klemmbacke (42) mit dieser starr verbunden ist und/oder daß vorteilhaft die Klemmbacken (41, 42) und die Nabe (27) des Zahnrades (26) mittels eines Stiftes (44) verdrehsicher gehalten ist.

12. Bodenbearbeitungsmaschine nach einem der vorherigen Ansprüche, dadurch gekennzeichnet, daß im Gehäuse (12) der Bodenbearbeitungsmaschine eine Bohrung (53) angeordnet ist, die mit einer im Nabenbereich der Zahnräder vorgesehenen Bohrung (54) axial ausrichtbar ist und daß für die Fixierung des Zahnrades ein durch beide Bohrungen greifender Bolzen (52) dient.

13. Bodenbearbeitungsmaschine nach Anspruch 12, dadurch gekennzeichnet, daß die Bohrung (53) im Gehäuse (12) als Gewindebohrung und der Bolzen (52) als Gewindebolzen ausgebildet ist.

14. Bodenbearbeitungsmaschine nach einem der vorherigen Ansprüche, dadurch gekennzeichnet, daß das Innengewinde der Gewindebohrung (28, 39) und des hierzu kompatiblen Außengewindes des Gewindezapfens (30) bei einem von oben gesehenen rechtsdrehenden Kreisel als Rechtsgewinde und bei dem linksdrehenden Kreisel als Linksgewinde ausgeführt ist.
